# EUROPÄISCHE PATENTSCHRIFT

(11) **EP 1 303 080 B1**
(45) Veröffentlichungstag und Bekanntmachung des Hinweises auf die Patenterteilung: **16.03.2005**
(21) Anmeldenummer: 01124041.3
(22) Anmeldetag: 09.10.2001
(51) Int. Cl.: H04L 12/40, H04J 3/06

(54) **Verfahren zur Kommunikation über einen Bus zwischen einem Prozessdatenserver und mindestens einem Empfänger**
Procedure for communication over a bus between a process data server and at least one receiver
Procédure de communication à travers un bus entre un serveur de données et au moins un récepteur

(43) Veröffentlichungstag der Anmeldung: 16.04.2003
(73) Patentinhaber: SIEMENS AKTIENGESELLSCHAFT, 80333 München (DE)
(72) Erfinder: Barthel, Herbert, 91074 Herzogenaurach (DE); Breu, Klaus, 92265 Edelsfeld (DE); Fuchs, Heiner, 91056 Erlangen (DE); Kremer, Karl-Theo, 91325 Adelsdorf (DE); Sigwart, Edgar, 92224 Amberg (DE); Tretter, Albert, 92718 Schirmitz (DE); Walter, Markus, 96050 Bamberg (DE)

(56) Entgegenhaltungen:
- EP-A- 0 991 216
- US-A- 6 128 318

## Beschreibung

Verfahren zur Kommunikation zwischen einem Prozessdatenserver und mindestens einem Empfänger, die an einen Bus angeschlossen und über diesen untereinander kommunikativ verbunden sind

Die vorliegende Erfindung betrifft ein Verfahren zur Kommunikation zwischen einem Prozessdatenserver und mindestens einem Empfänger, die an einen Bus angeschlossen und über diesen untereinander kommunikativ verbunden sind. An einen Bus, insbesondere einen so genannten Feldbus, der zur Vernetzung von zur Automatisierung technischer Prozesse vorgesehener Geräte verwendet wird, sind verschiedenste Kommunikationsteilnehmer anschließbar. Je nach Kommunikationsbeziehung fungiert ein und derselbe Kommunikationsteilnehmer zu einem Zeitpunkt als Sender und zu einem anderen Zeitpunkt als Empfänger. Es sind auch Kommunikationsteilnehmer bekannt, die keine eigene Sendeberechtigung haben und die deshalb Daten an andere Kommunikationsteilnehmer nur auf spezielle Anforderung aussenden. Kommunikationsteilnehmer ohne eine solche eigene Sendeberechtigung werden als Slaves bezeichnet, Kommunikationsteilnehmer mit eigener Sendeberechtigung, die damit auch in der Lage sind, bei einem Slave Daten abzurufen, werden als Master bezeichnet. Unter den Kommunikationsteilnehmern mit eigener Sendeberechtigung gibt es solche, die zu einem bestimmten Zeitpunkt Daten an zumindest einen weiteren Kommunikationsteilnehmer senden. Der sendende Kommunikationsteilnehmer wird im Folgenden zur Unterscheidung als Prozessdatenserver bezeichnet, der mindestens eine Kommunikationsteilnehmer, der die Daten empfängt, wird im Folgenden als Empfänger bezeichnet.

Bekannte Verfahren zur Kommunikation zwischen einem Prozessdatenserver und mindestens einem Empfänger erforderten eindeutige Kommunikationsbeziehungen zwischen dem Prozessdatenserver und jedem Empfänger. Dies führt in nachteiliger Weise zu einem hohen Datenaufkommen bei der Kommunikation über den Bus, denn wenn der Prozessdatenserver ein und denselben Datensatz an z.B. zehn Empfänger sendet und sich jeder dieser Empfänger aus dem Datensatz die für ihn relevante Passage auswählt, wird ein und derselbe Datensatz zehnmal über den Bus übermittelt, so dass der Bus in dieser Zeit für andere Kommunikationsvorgänge nicht zur Verfügung steht. Dieses nachteilige Verfahren war aber bisher dann unumgänglich, wenn eine Überwachung des Kommunikationsverkehrs erforderlich war, denn jeder der Empfänger kann auf die mit ihm stattfindende Kommunikation mit einem Quittungstelegramm an den Prozessdatenserver reagieren, so dass auf Seiten des Prozessdatenservers jederzeit eine Information darüber vorliegt, welche Kommunikationsbeziehungen intakt sind und welche Kommunikationsbeziehungen möglicherweise gestört sind.

Zur Reduktion der zu übertragenden Datenmengen ist für Kommunikationsbeziehungen zwischen einem Sender und mehreren Empfängern eine so genannte Broadcast oder Multicastkommunikation, die im Folgenden nur als Broadcastkommunikation bezeichnet wird, bekannt. Bei einer Broadcastkommunikation sendet der Sender ein und dasselbe Telegramm mit dem darin enthaltenen Datensatz quasi zeitgleich an sämtliche anderen Kommunikationsteilnehmer oder an eine Gruppe innerhalb der anderen Kommunikationsteilnehmer. Dies geschieht mit Hilfe einer speziellen Zielkennung, die in dem Telegramm enthalten ist und die z.B. alle anderen Kommunikationsteilnehmer oder eine Gruppe innerhalb aller anderen Kommunikationsteilnehmer adressiert. Mit einer solchen Broadcastkommunikation ist das Datenaufkommen bei einer Kommunikationsbeziehung wie oben skizziert zumindest insofern reduziert, als der gleiche Datensatz nicht an jeden Empfänger individuell übermittelt wird, sondern nur einmal über den Bus übertragen wird und dabei bereits bei jedem Empfänger eintrifft. Ist eine Überwachung der Kommunikation gefordert, müsste jeder Empfänger gleichwohl mit einem Quittungstelegramm auf den Empfang des Broadcasttelegramms reagieren. Spätestens hier ergäbe sich dann wieder eine Vervielfachung der über den Bus zu übertragenden Daten.

Die Aufgabe der Erfindung besteht daher darin, ein Kommunikationsverfahren anzugeben, bei dem die Menge der zu übertragenden Daten ohne Informations- oder Sicherheitsverlust minimiert ist.

Diese Aufgabe wird mit einem Verfahren, wie es in Anspruch 1 definiert ist, gelöst. Dazu ist vorgesehen, dass ein an den Bus angeschlossener Uhrzeitmaster periodisch an den Prozessdatenserver und den mindestens einen Empfänger eine Zeitinformation sendet. Ein solcher Uhrzeitmaster mit der beschriebenen Funktionalität ist bereits heute Bestandteil vieler Kommunikationsnetzwerke, da eine Synchronisation zwischen den einzelnen Kommunikationsteilnehmern z.B. für Protokollierungsfunktionen oder ähnliches ein Standarderfordernis heutiger Automatisierungsvorhaben ist. Gemäß dem erfindungsgemäßen Verfahren sendet der Prozessdatenserver an den mindestens einen Empfänger ein Telegramm, das eine Prozessdatenserverzeit, eine Information über die interne Zeit des Prozessdatenservers z.B. als Stand eines permanent (zeitäquitistand) inkrementierten Zählers oder als tatsächliche Uhrzeit umfasst. Der Empfänger bildet anhand der letzten vom Uhrzeitmaster erhaltenen Zeitinformation der mit dem Telegramm vom Prozessdatenserver erhaltenen Prozessdatenserverzeit eine Zeitdifferenz. Diese ermittelte Zeitdifferenz wird mit einem vorgegebenen oder vorgebbaren Schwellwert verglichen, der ggf. für jeden einzelnen Empfänger unterschiedlich ist. Wenn die ermittelte Zeitdifferenz den Schwellwert überschreitet, wenn also die Laufzeit des Telegramms zwischen Prozessdatenserver und Empfänger länger dauert als auf Seiten des Empfängers tolerierbar ist, löst der Empfänger eine sicherheitsgerichtete Reaktion aus. Die Obergrenze der maximalen Laufzeit, die auf Seiten des Empfängers tolerierbar ist, hängt erheblich von der durch den Empfänger abgewickelten Funktionalität und letztlich von der an den Empfänger angeschlossenen Prozessperipherie ab.
Im Gegensatz zu der früheren Überwachung gemäß dem Stand der Technik, die auf Seiten des Prozessdatenservers durchgeführt wurde, indem das Eintreffen eines Quittungstelegramms abgewartet wurde und anhand dessen auf eine intakte Kommunikationsbeziehung geschlossen wurde, ist jetzt eine Überwachung der Kommunikationsbeziehung auf Seiten des Empfängers möglich, der immer dann, wenn er ein Telegramm erhält, das einen Zeitstempel - die Prozessdatenserverzeit - trägt, der älter ist die zuletzt vom Uhrzeitmaster erhaltene Zeitinformation zuzüglich dem jeweiligen Schwellwert, eine sicherheitsgerichtete Reaktion auslöst.

Um die "Sicherheitskette" zu schließen, ist weiter gemäß der Erfindung vorgesehen, dass der Prozessdatenserver zu mindestens einem vorgegebenen oder vorgebbaren Zeitpunkt ein Testtelegramm an den Uhrzeitmaster und dieser darauf ein Quittungstelegramm an den Prozessdatenserver sendet, anhand dessen der Prozessdatenserver eine Telegrammlaufzeit ermittelt und eine sicherheitsgerichtete Reaktion auslöst, wenn die ermittelte Telegrammlaufzeit einen vorgegebenen oder vorgebbaren Schwellwert überschreitet. Auf diese Art wird sichergestellt, dass, wenn sich auf dem Kommunikationsweg zwischen dem Prozessdatenserver und Uhrzeitmaster ein Element befindet, das die Kommunikation verzögert, z.B. indem das Telegramm zunächst zwischengespeichert und aus diesem Speicher zu einem späteren Zeitpunkt weiter gesandt wird, erkannt wird. Bei einer solchen Konstellation könnten nämlich die Zeitinformationen des Uhrzeitmasters ohne Verzögerung bei den Empfängern eintreffen, während das Telegramm des Prozessdatenservers stets verzögert wäre und damit auch mit der in dem Telegramm enthaltenen Prozessdatenserverzeit die beim Empfänger ermittelte Zeitdifferenz erhöht wäre. Eine Kommunikationsbeziehung zwischen dem Prozessdatenserver und bestimmten Empfängern mit niedrigem Schwellwert für die Zeitdifferenz zwischen vom Uhrzeitmaster erhaltener Zeitinformation und der im Telegramm enthaltenen Zeitinformation wäre damit nicht zu gewährleisten.
Wenn der Prozessdatenserver die Zeitspanne zwischen Aussendung des Testtelegramms und Empfang des Quittungstelegramms überwacht, kann ermittelt werden, ob die Kommunikationsbeziehung zwischen Prozessdatenserver und Uhrzeitmaster ungünstiger ist als die Kommunikationsbeziehung zwischen Uhrzeitmaster und Empfänger. Sollte dies der Fall sein, wenn also die vom Prozessdatenserver ermittelte Telegrammlaufzeit den vorgegebenen oder vorgebbaren Schwellwert überschreitet, löst der Prozessdatenserver entsprechend eine sicherheitsgerichtete Information aus.

Befindet sich dagegen ein verzögerndes Element der oben beschriebenen Art zwischen Prozessdatenserver und Uhrzeitmaster einerseits und dem mindestens einen Empfänger andererseits, so ist die Kommunikationsbeziehung sowohl zwischen Uhrzeitmaster und diesem Empfänger als auch zwischen Prozessdatenserver und diesem Empfänger durch das verzögernde Element belastet, so dass beide Zeitinformationen in gleicher Weise "veraltet" beim Empfänger eintreffen. Wenn dies kontinuierlich erfolgt, entspricht dies lediglich einer Totzeit im System, die in den meisten Fällen ohne weiteres tolerierbar und häufig sogar kompensierbar ist.

Die ermittelte Telegrammverzögerung ist dann nie kleiner als die tatsächliche Telegrammverzögerung. Für die Sicherheitstechnik ist eine ermittelte Telegrammverzögerung die größer als die tatsächliche Telegrammverzögerung ist, im Wesentlichen unkritisch, während der komplementäre Fall (die ermittelte Telegrammverzögerung ist kleiner als die tatsächliche Telegrammverzögerung) häufig nicht tolerierbar ist.

Vorteilhafte Ausgestaltungen der Erfindung sind Gegenstand der Unteransprüche.

Wenn der Prozessdatenserver als Prozessdatenserverzeit die letzte vom Uhrzeitmaster erhaltene Zeitinformation verwendet, wird vorteilhaft in dem Gesamtsystem (Prozessdatenserver, Uhrzeitmaster, Empfänger, Bus) ein und dieselbe Zeitbasis verwendet, so dass Umrechnungen oder Anpassungen nicht erforderlich sind.

Das erfindungsgemäße Kommunikationsverfahren ist vorteilhaft mit sicherheitsgerichteten Komponenten einsetzbar. Die Kommunikationsteilnehmer in solchen sicherheitsgerichteten Systemen sind je nach Anforderung z.B. durch interne Redundanz sicherheitsgerichtet ausgeführt und ggf. auch zertifiziert. Das Verfahren würde also z.B. mit einem zertifizierten Prozessdatenserver und zertifizierten Empfängern ausgeführt, wobei sich die Zertifizierung hinsichtlich des Prozessdatenservers darauf bezöge, dass sichergestellt ist, dass der Prozessdatenserver Datensätze liefert, deren Fehlerfreiheit im Rahmen der jeweils zu berücksichtigenden Vorgaben garantiert ist und wobei sich die Zertifizierung der Empfänger z.B. darauf bezöge, dass eine Abschaltung eventuell angeschlossener Prozessperipherie durch eine redundante Ausführung der Kommunikationskanäle zu der Prozessperipherie auch dann gewährleistet ist, wenn eine erster Kommunikationskanal zu der Prozessperipherie ausfällt. Oder die Zertifizierung bezieht sich auf die Sicherheit der Prozesskomponente und überprüft ob eine Auswirkung von Fehlern in Hardware oder Software hinreichend klein ist, z.B. 10 bis 8 Fehlerauswirkungen pro Stunde. Eine Zertifizierung des Uhrzeitmasters ist dagegen nicht erforderlich, da der Uhrzeitmaster lediglich sämtliche Kommunikationsteilnehmer mit einer gemeinsamen Zeitbasis versorgt und auch eine eventuell verfälschte Zeitbasis keine nachteiligen Auswirkungen hätte, da die verfälschte Zeitbasis bei allen Kommunikationsteilnehmern in gleicher Weise vorliegen würde und ein solcher Fehler durch die Differenzbildung kompensiert bzw. aufgedeckt würde.

Wenn der Prozessdatenserver das Telegramm an den mindestens einen Empfänger als so genanntes Broadcast- oder Multicast-Telegramm sendet, können vorteilhaft für das erfindungsgemäße Kommunikationsverfahren bekannte Kommunikationsmechanismen verwendet werden, so dass der mit der Erfindung angestrebte Vorteil erreicht werden kann, ohne dass Änderungen etwa der für den jeweiligen Bus definierten Kommunikationsprotokolle erforderlich wären.

US 6 128 318 offenbart Kommunikation zwischen einem Server und mindestens einem Empfänger, die an einen Bus angeschlossen und über diesen kommunikativ verbunden sind. Ebenfalls wird ein Uhrzeitmaster offenbart, der an den Bus angeschlossen ist und der periodisch eine Zeitinformation sendet.

Nachfolgend wird ein Ausführungsbeispiel der Erfindung anhand der Figuren näher erläutert. Darin zeigt
- FIG 1: ein Bussystem und
- FIG 2: exemplarische Kommunikationsbeziehungen.

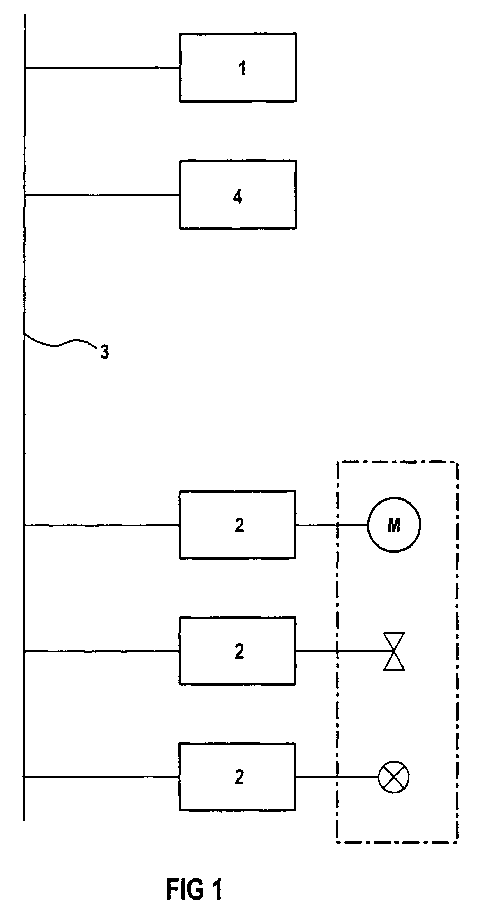

FIG 1 zeigt einen Prozessdatenserver 1 und mehrere Empfänger 2, die an einen Bus 3 angeschlossen sind. Die Empfänger sind Geräte, die zur Steuerung und/oder Überwachung eines nicht näher bezeichneten externen technischen Prozesses, in der Figur lediglich schematisch angedeutet, vorgesehen sind. An den Bus 3 ist ferner ein Uhrzeitmaster 4 angeschlossen.

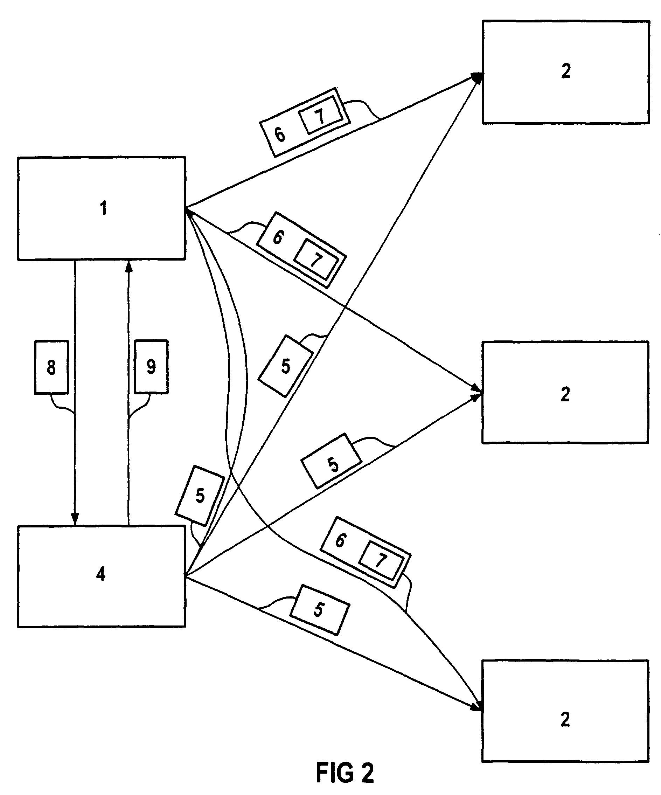

FIG 2 zeigt die Kommunikationsbeziehungen, die sich bei dem erfindungsgemäßen Verfahren ergeben. Der Uhrzeitmaster 4 sendet periodisch an den Prozessdatenserver 1 und jeden Empfänger eine Zeitinformation 5 als Broadcasttelegramm. Der Prozessdatenserver 1 sendet an den mindestens einen Empfänger 2 ein Telegramm 6, das eine Prozessdatenserverzeit 7 umfasst. Auf Seiten jedes Empfängers ist damit die Ermittlung einer Zeitdifferenz aus den beiden erhaltenen Zeitinformationen 5, 7 möglich. Sollte diese Zeitdifferenz einen vorgegebenen oder vorgebbaren Schwellwert überschreiten, löst der jeweilige Empfänger eine sicherheitsgerichtete Reaktion aus. Um einen eventuell durch den Bus 3 selbst bedingten Zeitversatz zwischen den Sendungen 5 des Uhrzeitmasters 4 und den Sendungen 6 des Prozessdatenservers 1 zu erkennen, sendet der Prozessdatenserver 1 zu mindestens einem vorgegebenen oder vorgebbaren Zeitpunkt, insbesondere periodisch, ein Testtelegramm 8 an den Uhrzeitmaster 4, worauf dieser mit einem Quittungstelegramm 9 antwortet. Aus der Zeitspanne zwischen Aussendung des Testtelegramms 8 und Eingang des Quittungstelegramms 9 ermittelt der Prozessdatenserver 1 eine Telegrammlaufzeit und löst eine eigene sicherheitsgerichtete Reaktion aus, wenn die ermittelte Telegrammlaufzeit einen vorgegebenen oder vorgebbaren Schwellwert überschreitet.

Damit lässt sich die vorliegende Erfindung wie folgt kurz beschreiben:

Es wird ein Kommunikationsverfahren angegeben, bei dem ein Uhrzeitmaster 4 periodisch an alle anderen Kommunikationsteilnehmer eine Zeitinformation 5 als Broadcasttelegramm sendet, so dass ein Telegramm 6, das von einem Prozessdatenserver 1 an einen oder mehrere Empfänger 2 gerichtet ist und das eine eigene Zeitinformation 5 enthält, beim Empfänger 2 dahingehend überprüft werden kann, wie lange dieses Telegramm 6 über den Bus 3 unterwegs ist, indem nämlich die Differenz aus der vom Uhrzeitmaster 4 erhaltenen Zeitinformation 5 und der im empfangenen Telegramm 6 enthaltenen Zeitinformation 5 gebildet wird und eine sicherheitsgerichtete Reaktion ausgelöst wird, wenn diese Differenz einen Schwellwert überschreitet. Um sicherzustellen, dass zwischen Prozessdatenserver 1 und Uhrzeitmaster 4 kein zu großer Zeitversatz entsteht, sendet der Prozessdatenserver 1 an den Uhrzeitmaster 4 ein Testtelegramm 8, auf das dieser mit einem Quittungstelegramm 9 antwortet, so dass der Prozessdatenserver 1 die Telegrammlaufzeit ermitteln und eine sicherheitsgerichtete Reaktion auslösen kann, wenn die ermittelte Telegrammlaufzeit einen Schwellwert überschreitet.

## Patentansprüche

1. Verfahren zur Kommunikation zwischen einem Prozessdatenserver (1) und mindestens einem Empfänger (2), die an einen Bus (3) angeschlossen und über diesen untereinander kommunikativ verbunden sind,
- wobei an den Bus (3) ferner ein Uhrzeitmaster (4) angeschlossen ist, der periodisch an den Prozessdatenserver (1) und den mindestens einen Empfänger (2) eine Zeitinformation (5) sendet,
- wobei der Prozessdatenserver (1) an den mindestens einen Empfänger (2) ein Telegramm (6) sendet, das eine Prozessdatenserverzeit (7) umfasst,
- wobei der Empfänger (2) anhand der letzten vom Uhrzeitmaster (4) erhaltenen Zeitinformation (5) und der mit dem Telegramm (6) erhaltenen Prozessdatenserverzeit (7) eine Zeitdifferenz bildet und eine sicherheitsgerichtete Reaktion auslöst, wenn die ermittelte Zeitdifferenz einen vorgegebenen oder vorgebbaren Schwellwert überschreitet und
- wobei der Prozessdatenserver (1) zu mindestens einem vorgegebenen oder vorgebbaren Zeitpunkt ein Testtelegramm (8) an den Uhrzeitmaster (4) und dieser darauf ein Quittungstelegramm (9) an den Prozessdatenserver (1) sendet, anhand dessen der Prozessdatenserver (1) eine Telegrammlaufzeit ermittelt und eine sicherheitsgerichtete Reaktion auslöst, wenn die ermittelte Telegrammlaufzeit einen vorgegebenen oder vorgebbaren Schwellwert überschreitet.

2. Kommunikationsverfahren nach Anspruch 1,
wobei der Prozessdatenserver (1) als Prozessdatenserverzeit (7) die letzte vom Uhrzeitmaster (4) erhaltene Zeitinformation (5) verwendet.

3. Kommunikationsverfahren nach Anspruch 1 oder 2,
wobei der Prozessdatenserver (1) das Telegramm (6)an den mindestens einen Empfänger (2) als sogenanntes Broadcast- oder Multicast-Telegramm (6) sendet.

## Claims

1. A method for communication between a process data server (1) and at least one receiver (2) which are connected to a bus (3) and linked communicatively to one another via said bus,
- wherein a time master (4) is also connected to the bus (3), said time master periodically sending time information (5) to the process data server (1) and to the at least one receiver (2),
- wherein the process data server (1) sends a telegram (6) to the at least one receiver (2), said telegram comprising a process-data-server time (7),
- wherein the receiver (2) forms by means of the last time information (5) received from the time master (4) and the process-data-server time (7) received with the telegram (6) a time difference and triggers a security-oriented response if the time difference determined exceeds a predetermined or predeterminable threshold value and
- wherein the process data server (1) sends at least one predetermined or predeterminable time a test telegram (8) to the time master (4) and this time master sends in response an acknowledgment telegram (9) to the process data server (1), by means of which acknowledgment telegram the process data server (1) determines a telegram runtime and triggers a security-oriented response if the telegram runtime determined exceeds a predetermined or predeterminable threshold value.

2. A communication method according to Claim 1,
wherein the process data server (1) uses the last time information (5) received from the time master (4) as the process-data-server time (7).

3. A communication method according to Claim 1 or Claim 2,
wherein the process data server (1) sends the telegram (6) to the at least one receiver (2) as a so-called broadcast or multicast telegram (6).

## Revendications

1. Procédé de communication entre un serveur (1) de données de processus et au moins un récepteur (2), qui sont raccordés à un bus (3) et qui par l'intermédiaire de celui-ci sont reliés entre eux de manière à communiquer,
- dans lequel il est raccordé au bus (3),en outre, une horloge mère (4), qui envoie périodiquement une information (5) de temps au serveur (1) de données de processus et au au moins un récepteur (2),
- dans lequel le serveur (1) de données de processus envoie au au moins un récepteur (2) un télégramme (6), qui comprend un temps (7) de serveur de données de processus,
- dans lequel le récepteur forme, au moyen du dernier entre l'information (5) de temps obtenue par l'horloge mère et le temps (7) de serveur de données de processus obtenu par le télégramme, une différence de temps et déclenche une réaction de sécurité lorsque la différence de temps déterminée dépasse une valeur de seuil prescrite ou qui peut l'être, et
- le serveur (1) de données de processus envoie à au moins un instant prescrit ou qui peut l'être, un télégramme (8) de test à l'horloge (4) mère et celle-ci envoie ensuite au serveur (1) de données de processus un télégramme (9) d'accusé de réception, au moyen duquel le serveur (1) de données de processus détermine une durée de transit du télégramme et déclenche une réaction de sécurité lorsque la durée de transit du télégramme qui a été déterminée dépasse une valeur de seuil prescrite ou qui peut l'être.

2. Procédé de communication suivant la revendication 1,
dans lequel le serveur (1) de données de processus utilise, comme temps (7) de serveur de données de processus, la dernière information (5) de temps obtenue de l'horloge (4) mère.

3. Procédé de communication suivant la revendication 1 ou 2,
dans lequel le serveur (1) de données de processus envoie le télégramme (6) au au moins un récepteur (2), sous la forme de ce que l'on appelle un télégramme (6) broadcast ou multicast.
